# EUROPEAN PATENT APPLICATION

(11) **EP 1 909 155 A1**
(43) Date of publication of application: **09.04.2008**
(21) Application number: 06780874.1
(22) Date of filing: 07.07.2006
(51) Int. Cl.: G05B 19/418

(54) **ARTICLE MANAGEMENT SYSTEM**

(30) Priority: 14.07.2005 JP 2005205353
(71) Applicant: Pentax Corporation, Tokyo 174-8639 (JP)
(72) Inventor: NAKAMURA, Kazuo, PENTAX Corporation, Tokyo 174-8639 (JP)
(74) Representative: Schaumburg, Thoenes, Thurn, Landskron
(86) International application number: PCT/JP2006/313549
(87) International publication number: WO 2007/007657

(57) **Abstract**

There is provided an article management system which is provided with a product data creation means which creates, for the management targets, product data corresponding to products of the previous process, a part data creation means which creates part data corresponding to parts in the next process and corresponding to the products, an identification assigning means which assigns virtual identification information to a plurality of management targets subjected to a process between a first time and a second time in at least one of the previous process and the next process, and a management data creation means which creates management data formed of a single file by associating the product data, the part data and the identification information with each other.

## Description

### TECHNICAL FIELD

The present invention relates to an article management system modeled as a hierarchical structure of a plurality of processes by sequentially connecting a previous process in which management targets to be used as parts in a next process are manufactured as products and a next process in which second products are manufactured using the products manufactured in the previous process as parts.

### BACKGROUND OF THE INVENTION

In general, products are manufactured through a production line having a plurality of processes arranged in a predetermined order. In each process, various types of parts are mounted on a main part which is conveyed from the upstream side to the downstream side along the production line, or the main part is processed. In order to judge whether an article is nondefective or defective on the production line, a sampling inspection is conducted, for example. The term sampling inspection means an inspection where some articles are randomly picked up from a plurality of articles being conveyed between processes to inspect the sampled articles and to judge whether the plurality of articles are nondefective or defective in accordance with the inspection result. If the articles subjected to the sampling inspection are nondefective, articles of the same lot or articles being conveyed on the front side or on the rear side with respect to the sampled article are also judged to be nondefective. If the sampled articles are defective, articles of the same lot or articles being conveyed on the front side or on the rear side with respect to the sampled articles are also judged to be defective.

For example, Japanese Patent Provisional Publication No. 2002-76087 discloses a sampling inspection management system capable of achieving a sampling inspection having high efficiency.

In recent years, importance of traceability is advocated, for example, to enhance production management in various industries. In Japanese Patent Provisional Publication No. 2001-56706A, the assignee of this application suggested a management system capable of simplifying production management and enhancing a function of traceability (i.e., a tracing function). In this publication, the assignee focuses attention on the fact that each part used by manufacturing equipment is previously manufactured as a product in another manufacturing equipment. In addition, the assignee regards a functional unit, where parts are collected and then a product (i.e., a part manufactured with each manufacturing equipment) is manufactured, as a "process", and expresses manufacturing of a final product as a hierarchical structure of a plurality of processes.

### DISCLOSURE OF THE INVENTION

It is desired that a management system having an excellent traceability function can also be applied to a production line where a sampling inspection described above is conducted. In a conventional management system, it is required to assign identification information (e.g., a lot number, a barcode, an IC chip, etc.) to each of management targets. Since all of the management targets are inspected in a production line where a 100% inspection is conducted, it is required to assign identification to each management target. Therefore, it is possible to effectively perform the tracing even if the conventional management system is applied as it is. However, for a production line where a sampling inspection is conducted, articles to be inspected are a part of the all articles. Therefore, identification of each management target is not required necessarily. In other words, the necessity of assigning identification information to each management target is low.

Regarding a system where identification information is assigned to all of the management targets, the number of processes or cost may increase relative to a system where identification information is not assigned. Therefore, regarding a production line where a part of articles flowing between processes is sampled, an article management system capable of executing tracing without assigning identification information to each management target is desired.

The present invention has been made in consideration of the above problems. It is therefore an object of the present invention to provide an article management system capable of easily executing tracing without assigning identification information to each management target.

To solve the above mentioned problems, according to an aspect of the invention, there is provided an article management system having a previous process where management targets to be used as parts in a next process are manufactured as products and a next process where second products are manufactured by using the products manufactured in the previous process as parts, the previous process and the next process being successively connected to model a plurality of processes as a hierarchical structure. The article management system includes a product data creation means which creates, for the management targets, product data corresponding to products of the previous process, a part data creation means which creates part data corresponding to parts in the next process and corresponding to the products, an identification assigning means which assigns virtual identification information to a plurality of management targets subjected to a process between a first time and a second time in at least one of the previous process and the next process, and a management data creation means which creates management data formed of a single file by associating the product data, the part data and the identification information with each other.

To solve the above mentioned problems, according to anther aspect of the invention, there is provided an article management system for managing articles processed successively in a plurality of processes arranged in a hierarchical structure. The article management system includes a previous process data creation means which creates previous process data concerning a previous process where articles are processed and stores the previous process data, a next process data creation means which creates next process data concerning a next process which is located on a downstream of the previous process and in which the articles processed in the previous process are processed further, and stores the next process data while associating the next process data with the previous process data, and an identification assigning means which assigns, at predetermined time intervals, virtual identification information to an article group which is processed in the previous process and is not processed in the next process, and stores the identification information while associating the identification information with the previous process data and the next process data.

### BRIEF DESCRIPTION OF THE DRAWINGS

[Fig. 1] Fig. 1 illustrates a configuration of an article management system according to an embodiment of the invention.
[Fig. 2] Fig. 2 illustrates a configuration of a server provided in the article management system according to the embodiment of the invention.
[Fig. 3] Fig. 3 illustrates a configuration of a terminal provided in the article management system according to the embodiment of the invention.
[Fig. 4] Fig. 4 illustrates a flow of articles treated through processes in a time series in accordance with the embodiment of the invention.
[Fig. 5] Fig. 5 illustrates management data created by a terminal 3A at a time T₁ in accordance with the embodiment of the invention.
[Fig. 6] Fig. 6 illustrates management data created by the terminal 3A at a time T'₁ in accordance with the embodiment of the invention.
[Fig. 7] Fig. 7 illustrates management data created by terminals 3A and 3B at a time T₂ in accordance with the embodiment of the invention.
[Fig. 8] Fig. 8 illustrates management data created by terminals 3A and 3B at a time T'₂ in accordance with the embodiment of the invention.
[Fig. 9] Fig. 9 illustrates management data created by terminals 3A-3C at a time T₃ in accordance with the embodiment of the invention.
[Fig. 10] Fig. 10 illustrates management data created by terminals 3A-3C at a time T'₃ in accordance with the embodiment of the invention.
[Fig. 11] Fig. 11 illustrates management data created by terminals 3A-3C at a time T₄ in accordance with the embodiment of the invention.
[Fig. 12] Fig. 12 illustrates a flow of articles treated through processes in a time series in accordance with another embodiment of the invention.
[Fig. 13] Fig. 13 illustrates management data created by terminals 3AA and 3AA' at a time T'₁₁ in accordance with another embodiment of the invention.
[Fig. 14] Fig. 14 illustrates management data created by terminals 3AA, 3AA' and 3BB at a time T₁₂ in accordance with another embodiment of the invention.
[Fig. 15] Fig. 15 illustrates management data created by terminals 3AA, 3AA' and 3BB at a time T'₁₂ in accordance with another embodiment of the invention.

### BEST MODE FOR CARRYING OUT THE INVENTION

Hereinafter, an article management system according to an embodiment of the invention is described with reference to the accompanying drawings. The article management system according to the embodiment can be applied to management of various types of articles such as industrial products and food articles.

In the article management system according to the embodiment, the entire production line including a plurality of processes is managed. The term "process" as used herein means a functional unit where collected parts are used to manufacture a product. That is, the "process" means a functional unit achieved by various types of manufacturing facilities such as a machine tool installed in a certain area in the manufacturing facilities such as a plant, various types of warehouses for storing parts and products, and workers who work for manufacturing through the manufacturing facilities and warehouses. The manufacturing of final products is modeled as a tree structure where these processes are connected successively in a hierarchical structure.

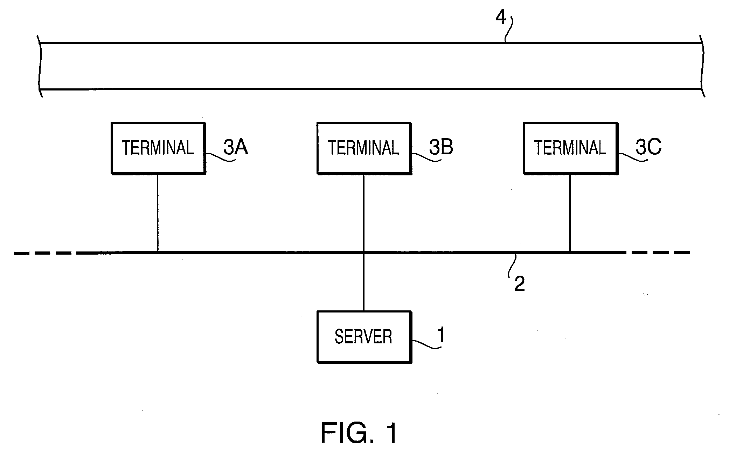

Fig. 1 illustrates a configuration of the article management system according to the embodiment. In this embodiment, articles conveyed on a belt-conveyer installed in a production line are regarded as management targets, for example. At each of points along the belt conveyer, a process is arranged to conduct assembling or processing. Although in Fig. 1 only three processes (process A, process, B, process C) are illustrated, actually a plurality of processes are provided after the process C. The management targets are processed sequentially through the processes A, B and C and the plurality of processes arranged after the process C (not shown), so that final products are manufactured.

The processes are connected in a predetermined order. In each process, articles carried as "products" from a previous process (i.e., articles carried in the process) are used as "parts" to manufacture "products", and the "products" are carried to a next process. For example, in the process B, articles carried from the process A as "products" are used as "parts" to manufacture "products", and the "products" are carried to the process C. In this specification, "products" and "parts" are generically called "articles".

As shown in Fig. 1, the article management system according to the embodiment includes a server 1, a LAN (Local Area Network) 2 forming a network, a plurality of terminals 3A-3C connected to the server 1 via the LAN 1, and the belt conveyer 4 which conveys sequentially the management targets. The terminals 3A to 3C are arranged correspondingly to the processes A to C. The plurality of processes arranged after the process C are also provided with terminals which are connected to the server 1 via the LAN 2.

Hereafter, the server 1 and the terminals 3A to 3C are explained in detail.

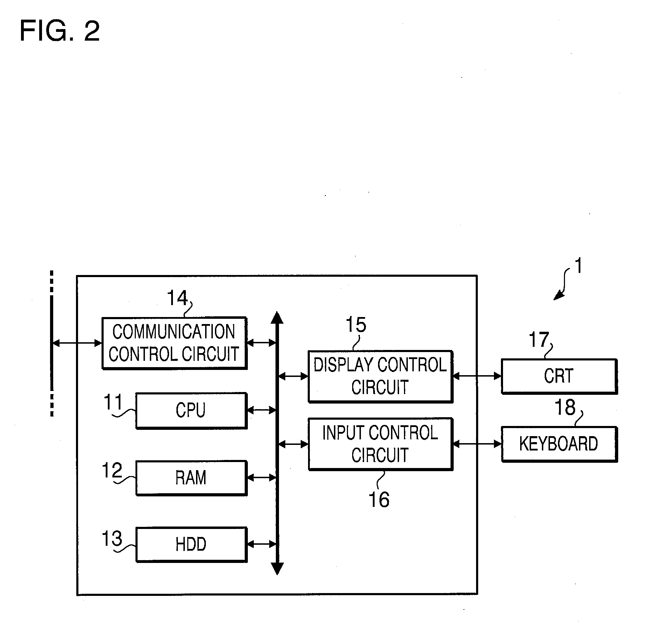

Fig. 2 illustrates a configuration of the server 1. As shown in Fig. 2, the server 1 has a CPU (Central Processing Unit) 11, a RAM (Random Access Memory) 12, an HDD (Hard Disk Drive) 13, a communication control circuit 14, a display control circuit 15, and an input control circuit 16, which are connected to each other via a bus. Further, the server 1 has a CRT 17 connected to the display control circuit 15, and a keyboard 18 connected to the input control circuit 16. The server 1 is connected to the LAN 2 through the communication control circuit 14.

In the HDD 13, various programs including an operating system and a database program have been stored in advance. In the HDD 13, data associated with a link representing connection between processes is also stored as management data which is described later. The term "link" as used herein means connection information which exists between processes in the article management system and is used for connecting processes with each other while associating them with each other. In the embodiment, the link corresponds to a virtual box number which is described later.

The CPU 11 loads a program stored in the HDD 13 into a certain area of the RAM 12. Further, the CPU 11 outputs necessary information for a worker by controlling the display control circuit 15 to display an image on the CRT 17. When the user conducts an input operation through the keyboard 18, the CPU 11 detects the input operation through the input control circuit 16.

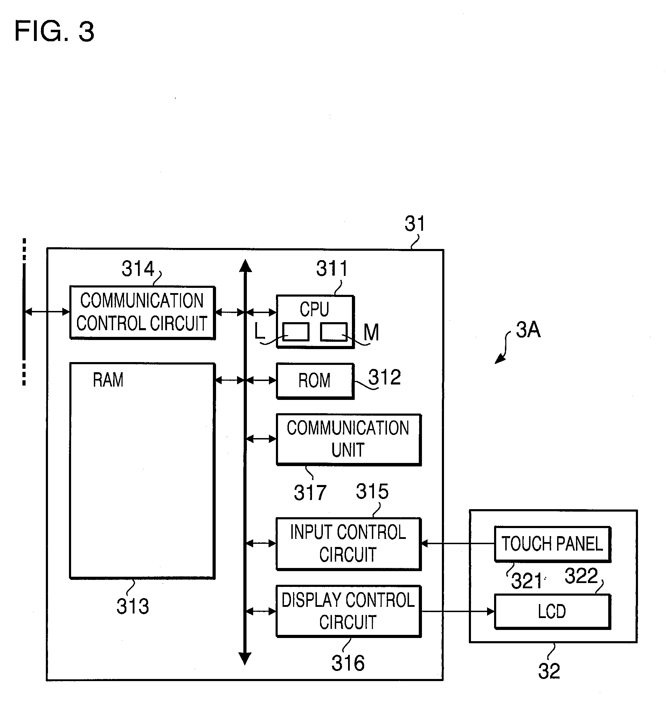

Fig. 3 illustrates a configuration of the terminal 3A. Since other terminals 3B and 3C have the same configuration as that of the terminal 3A, the terminal 3A is explained and explanations of the terminals 3B and 3C are omitted. As shown in Fig. 3, the terminal 3A has a programmable logic controller (hereafter, abbreviated as PLC) 31, and a display input device 32.

The PLC 31 has a CPU 311, an HDD 312, a RAM 313, a communication control circuit 314, an input control circuit 315, and a display control circuit 316. The CPU 311 includes a timer M functioning as a clocking means therein. The CPU 311 is able to obtain time (year, month, day, hour, minute, second) from the timer M. In the HDD 312, various programs such as a database program have been stored in advance.

The display input device 32 has a touch panel 321 and a liquid crystal panel (hereafter, abbreviated as an LCD) 322. The touch panel 321 is placed on the screen of the LCD 322, and is connected to the input control circuit 315 of the PLC 31. The LCD 322 is connected to the display control circuit 316 of the PLC 31.

The CPU 311 of the PLC 31 loads a program stored in the HDD 312 into a predetermined area of the RAM 313 and executes the program. The CPU 311 controls the display control circuit 316 to display an image on the LCD 322 of the display input device 32. In the image, a use start button, a manufacture start button, a use end button, a manufacture end button are included. The use start button is a button to be pressed when use of the parts is started. The manufacture start button is a button to be pressed when manufacturing of products is started. The use end button is a button to be pressed when use of the parts is finished. The manufacture end button is a button to be pressed when the manufacture of products is ended. For example, when the use start button is pressed, the CPU 311 refers to the time M to obtain the time of pressing, and store it in the HDD 312.

The worker is able to conduct an input operation by pressing the button displayed on the LCD 322. That is, the touch panel 321 located on the screen of the LCD 322 is able to detect the pressed position on the screen by the worker, and to transmit a signal representing the pressed position to the input control circuit 315 of the PLC 31. Further, the CPU 311 is able to detect the pressed position on the screen by the worker through the input control circuit 315, and to recognize which of the positions of the buttons on the screen coincides with the detected position.

The terminals 3A to 3C configured as described above are connected to the LAN 2 via the communication control circuit 314.

It is possible to automatically execute operations conducted on the terminal 3A by a program. If such a program is executed, a signal equal to a signal output when a certain button is pressed (e.g., the use start button) is transmitted to the input control circuit 315 at predetermined timing (e.g., a time when use of parts is started). A signal equal to a signal which is output when a button is pressed and which corresponds to each process may be transmitted to each terminal at a time. The above mentioned timing may be preprogrammed.

Next, relationship between a flow of parts/products in each of actual processes and data processing in the article management system is explained. In the article management system according to the embodiment, a group of articles being conveyed on the belt conveyer are classified in regard to a time series (time units obtained by dividing a continuous time flow at predetermined intervals), and a "virtual box number" which is tentatively assigned on data is associated with each classified article group so that management of articles can be attained.

In the article management system according to the embodiment, a "virtual box number" is associated with a piece of management data (a file) to execute various processes. Each piece of management data is created by a database program executed by each terminal.

The management data is data corresponding to a group of articles which moves between processes and is associated with a certain "virtual box number". The certain group of articles is treated as "products" in a previous process and is treated as "parts" in a next process. Accordingly, management data includes data regarding a previous process, i.e., data (previous process data or product data) defined when articles associated with a "virtual box number" are regarded as products, and data regarding a next process, i.e., data (next process data or part data) defined when the articles associated with a "virtual box number" are regarded as parts.

The previous process data includes, for example, product process name data, product manufacture start time data, product manufacture end time data. The product process name data is data representing a name of a process where the products are manufactured. The product manufacture start time data is data representing the time when the manufacturing of products is started. The product manufacture end time data is data representing the time when the manufacturing of products is finished.

The next process data includes, for example, part process name data, part use start time data, and part use end time data. The part process name data is data representing a name of a process where parts are used. The part use start time data is data representing the time when use of the parts is started. The part use end time data is data representing the time when use of the parts is finished.

When articles are conveyed on the belt conveyer 4, corresponding management data is updated in conformity with a flow of the articles in the article management system.

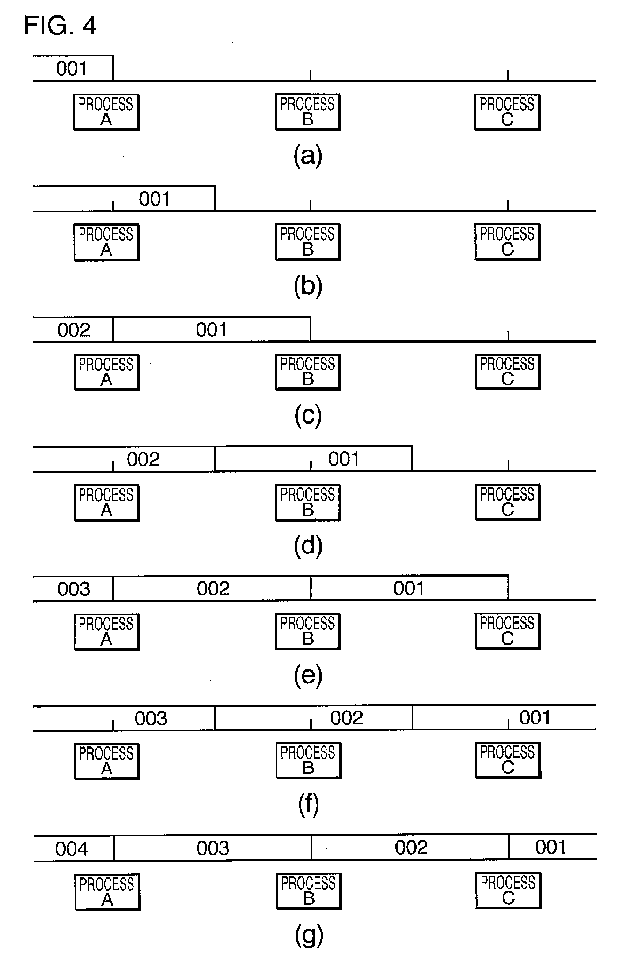

Fig. 4 is a time series illustration of a flow of articles processed by each process in the embodiment. In Figs. 4(a) to 4(g), flows of articles at times T₁, T'₁, T₂, T'₂, T₃, T'₃, and T₄ are illustrated, respectively. The time proceeds in the order of T₁, T'₁, T₂, T'₂, T₃, T'₃, and T₄. The time T'₁ is an intermediate time between the times T₁ and T₂. The time T'₂ is an intermediate time between the times T₂ and T₃. The time T'₃ is an intermediate time between the times T₃ and T₄. These time intervals are equal to each other. That is, the time interval between the times T₁ and T₂, the time interval between the times T₂ and T₃, and the time interval between the times T₃ and T₄ are equal to each other.

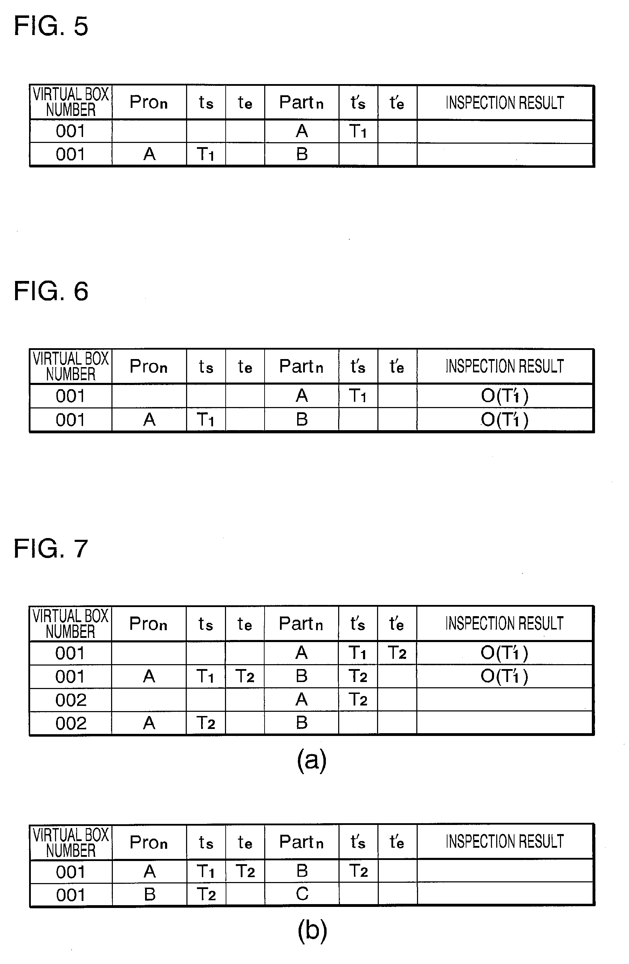

As shown in Fig. 4(a), the front articles carried on the belt conveyer 4 arrive at the process A at the time T₁. Fig. 5 illustrates the management data created by the terminal 3A at the time T₁.

As described above, in each process, articles carried in the process are used as "parts" to manufacture "products" and the "products" are carried to the next process. Therefore, in the process A, the time T₁ when the front of articles conveyed on the belt conveyer 4 arrives is treated as a time when use of "parts" is started. When the "parts" arrive at the process A, the parts are processed by a worker, robots, etc. to manufacture "products". Therefore, the time T₁ is treated as a time when the manufacturing of "products" is started. The manufactured "products" flow along the belt conveyer 4 to pass the process A and to be carried to the process B.

When the articles arrive at the process A, the worker presses the use start button and the manufacture start button. Correspondingly, the CPU 311 of the terminal 3A executes a program loaded into the RAM 313 to create the management data and store the management data in the HDD 312. It should be noted that the management data is data including a plurality of fields. The fields include "Virtual Box Number", "Proₙ (product process name data)", "tₛ (product manufacture start time data)", "tₑ (product manufacture end time data)", "Partₙ (part process name data)", "t'ₛ (part use start time data)", "t'ₑ" (part use end time data)", and "Inspection Result (data representing a result of the sampling inspection".

When the use start button is pressed at the time T₁, the CPU 311 of the terminal 3A creates a piece of management data, stores "T₁" in the field "Partₙ" of the management data, stores "T₁" in the field "t'ₛ" of the management data, and assigns a virtual box number "001" to the management data. This means that use a group of articles (i.e., parts of the process A) to which the virtual box name "001" is assigned is started at the time T₁ in the process A. It should be noted that the above mentioned management data is abbreviated as "management data A₀₀₁". The other pieces of management data are also abbreviated accordingly.

When the manufacture start button is pressed at the time T1, the CPU 311 of the terminal 3A creates management data A'₀₀₁, stores "A" in the field "Proₙ", stores "T₁" in the field "tₛ", and stores "B" in the field "Partₙ" of the management data. This means that manufacturing of a group of articles (i.e., products of the process A) to which the virtual box name "001" is assigned is started at the time T₁. It should be noted that each terminal provided in the article management system according to the embodiment has recognized in advance processes adjoining thereto. Therefore, the CPU 311 of the terminal 3A is able to store "B" representing the next process of the process A in the field "Partₙ" of the management data A'₀₀₁.

As shown in Fig. 4(b), the front of articles flowing along the belt conveyer 4 is situated at a position between the process A and the process B at the time T'₁. The belt conveyer 4 carries articles at a constant speed. In addition, intervals of the processes are equal to each other. For example, an interval between the process A and the process B and an interval between the process B and the process C are equal to each other. Therefore, the front of articles flowing along the belt conveyer 4 at the time T'₁ is situated at an intermediate point between the process A and the process B.

Fig. 6 illustrates the management data updated by the terminal 3A at the time T'₁. At the time T'₁, the sampling inspection is conducted in the process A. The sampling inspection is executed on the articles treated as "products" in a process (i.e., the process A). In the sampling inspection, the worker samples some articles from articles flowing along the belt conveyer 4 to judge whether they are defective or nondefective. If all of the sampled articles are nondefective, the CPU 311 of the terminal 3A stores "O (time of inspection)" in the filed "inspection result" of the management data A₀₀₁ and A'₀₀₁. If at least one article of the sampled articles is judged to be defective, the CPU 311 stores "× (time of inspection)" in the field "inspection result". It is assumed that all of the sampled articles are judged to be nondefective, and "O(T'₁)" is stored in the field of "inspection result" of the management data A₀₀₁ and A'₀₀₁ by a user operation (e.g., an input operation through a keyboard).

As shown in Fig. 4(c), the front of the articles flowing along the belt conveyer 4 arrives at the process B at the time T₂. Fig. 7(a) illustrates the management data updated by the terminal 3A at the time T₂. Fig. 7(b) illustrates the management data created by the terminal 3B at the time T₂.

When a certain time elapses from the time T₁ (i.e., when the time T₂ is reached), the process A recognizes that use of "parts" and manufacturing of "products" with respect to the articles to which the virtual box name 001 is assigned are finished. Therefore, the worker presses the use end button and the manufacture end button. Accordingly, the CPU 311 of the terminal 3A updates the management data A₀₀₁ and A'₀₀₁.

When the use end button is pressed at the time T₂, the CPU 311 of the terminal 3A stores "T₂" in the field "t'ₑ" of the management data A₀₀₁. This means that use of parts with respect to the group of articles to which the virtual box number 001 is assigned is finished at the time T₂.

When the manufacture end button is pressed at the time T₂, the CPU 311 of the terminal 3A stores "T₂" in the field "tₑ" of the management data A'₀₀₁. Since the CPU 311 of the terminal 3A knows a conveying speed of the belt conveyer 4 and a distance to the process B, the CPU 311 of the terminal 3A is able to know in advance that the front of the group of articles to which the virtual box name "001" is assigned arrives at the process B at the time T₂. Therefore, according to the embodiment, "T₂" is stored in the field "t'ₛ" of the management data A'₀₀₁. Next, the management data A'₀₀₁ is transmitted to the terminal 3B via the LAN 2 as data representing a link to the process B. The above mentioned update means that the manufacturing of "products" in the process A with respect to the group of articles to which the virtual box number 001 is assigned is finished, and use of "parts" in the process B with respect to the group of articles to which the virtual box number 001 is assigned is started.

Through the above mentioned sequence of processes, the group of articles which passed through the process A between the time T₁ and the time T₂ is processed in the article management system as a group having an identification of the virtual box number "001".

The articles are conveyed in a state where they are aligned along the belt conveyer. Therefore, articles are carried successively in the process A after the time T₂. Therefore, in order to create the management data for the articles which arrives after the time T₂, the worker presses the use start button and the manufacture start button at the same time when the use end button and the manufacture end button are pressed. Correspondingly, the CPU 311 of the terminal 3A executes the program loaded into the RAM 313 to create the management data, and stores the management data in the HDD 312.

When the use start button is pressed at the time T₂, the CPU 311 of the terminal 3A creates management data A₀₀₂, stores "A" in the field "Partₙ", and stores "T₂" in the field "t'ₛ" in the management data A₀₀₂, and then assigns a virtual box number "002" to the management data A₀₀₂.

When the manufacture start button is pressed at the time T₂, the CPU 311 of the terminal 3A creates management data A'₀₀₂, stores "A" in the field "Proₙ", stores "T₂" in the field "tₛ", and stores "B" in the field "Partₙ" in the management data A₀₀₂, and then assigns a virtual box number "002" to the management data A002.

As in the case of the process A, when the articles arrive at the process B, a worker of the process B presses the use start button and the manufacture start button. Correspondingly, the CPU 311 of the terminal 3B executes a program loaded into the RAM 313 to create the management data, and the management data is stored in the HDD 312. Further, the CPU 311 of the terminal 3B receives the management data A'₀₀₁ transmitted by the terminal 3A, and stores the management data A'₀₀₁ temporarily in the HDD 312.

When the use start button is pressed at the time T₂, the CPU 311 of the terminal 3B creates management data B_{001,} stores "B" in the field "Partₙ", stores "T₂" in the field "t'ₛ" in the management data B₀₀₁, and assigns a virtual box number "001" to the management data B₀₀₁. Regarding the fields "Partₙ" and "t'ₛ", the management data B₀₀₁ has the same data as that of the management data A'₀₀₁. The terminal (i.e., the terminal 3A) judges such management data to be data to be shared with the adjacent process. To share the above mentioned data between the terminals 3A and 3B (i.e., to provide the same data for the terminals 3A and 3B), each field of the management data A'₀₀₁ (excepting the inspection result) is copied to each field of the management data B₀₀₁. With the configuration, the management data B₀₀₁ and the management data A'₀₀₁ have the same data excepting the field data of "inspection result".

When the manufacture start button is pressed at the time T₂, the CPU 311 of the terminal 3B creates management data B'₀₀₁, stores "B" in the field "Proₙ", stores "T₂" in the field "tₛ" in the management data B'₀₀₁, stores "C" representing the next process of the process B in the field "Partₙ", and assigns a virtual box number "001" to the management data B'_{001.}

As shown in Fig. 4(d), at the time T'₂, the front of the articles flowing along the belt conveyer 4 is situated between the process B and the process C. The front of the group of articles to which the virtual box number "002" is assigned in the process A is situated between the process A and the process B.

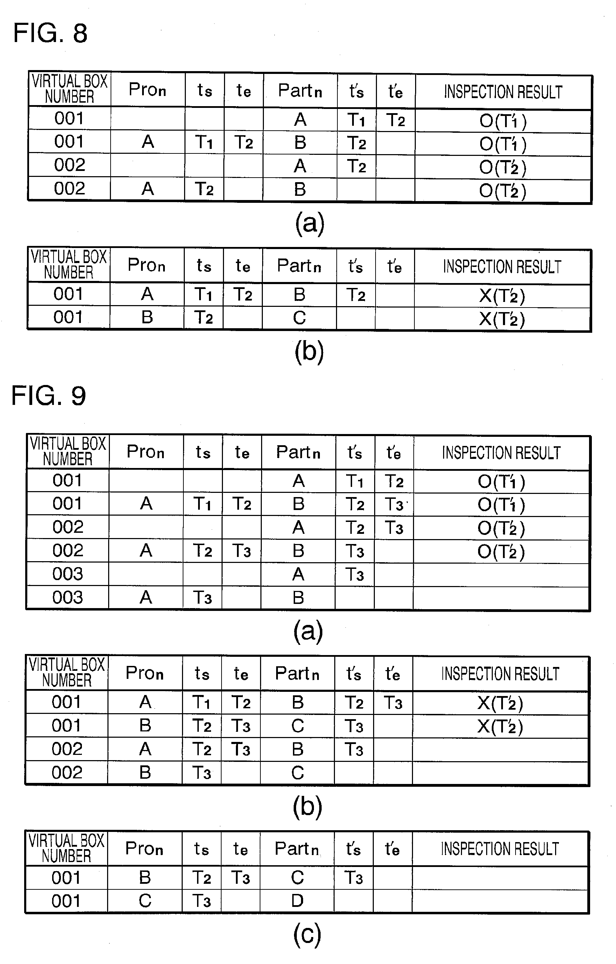

Fig. 8(a) illustrates the management data updated by the terminal 3A at the time T'₂. Fig. 8(b) illustrates the management data updated by the terminal 3B at the time T'₂. At the time T'₂, the sampling inspection is conducted in each of the processes A and B. It is assumed that all the articles are judged to be nondefective in the process A, and therefore "O(T'₂)" is stored by a user operation in the fields "inspection result" of each of the management data A₀₀₂ and the management data A'₀₀₂. It is assumed that defectives are found in the process B, and therefore "×(T'₂)" is stored by a user operation in the fields "inspection result" of each of the management data B₀₀₁ and the management data B'₀₀₁.

As shown in Fig. 4(e), the front of the articles conveyed on the belt conveyer 4 arrives at the process C at the time T₃. Fig. 9(a) illustrates the management data updated by the terminal 3A at the time T₃. Fig. 9(b) illustrates the management data updated by the terminal 3B at the time T₃. Fig. 9(c) illustrates the management data created by the terminal 3C at the time T₃.

When a certain time elapses from the time T₂ (i.e., when the time T₃ is reached), the process A recognizes that use of "parts" and manufacturing of "products" with respect to the group of articles to which the virtual box name 002 is assigned are finished. Therefore, the worker presses the use end button and the manufacture end button. Accordingly, the CPU 311 of the terminal 3A updates the management data A₀₀₂ and A'₀₀₂.

When the use end button is pressed at the time T₃, the CPU 311 of the terminal 3A stores "T₃" in the field "t'ₑ" of the management data A₀₀₂. Further, when the manufacture end button is pressed, the CPU 311 of the terminal 3A stores "T₃" in each of the fields "tₑ" and "t'ₛ" of the management data A'₀₀₂. Then, the CPU 311 of the terminal 3A transmits the management data A'₀₀₂ which serves as a link to the process B, to the terminal 3B via the LAN 2.

Through the above mentioned sequence of processes, the group of articles which passed through the process A between the time T₂ and the time T₃ is processed in the article management system as a group having an identification of the virtual box number "002".

The worker of the process A also presses the use start button and the manufacture start button to create the management data for articles carried into the process A after the time T₃. When the use start button is pressed, the CPU 311 of the terminal 3A creates management data A₀₀₃, stores "A" in the fields "Partₙ", stores "T₃" in the field "t'ₛ", and assigns a virtual box number "003" to the management data A₀₀₃. When the manufacture start button is pressed, the CPU 311 of the terminal 3A creates management data A'₀₀₃, stores "A'' in the fields "Proₙ", stores "T₃" in the field "tₛ", stores "B" in the field "Partₙ" and assigns a virtual box number "003" to the management data A'₀₀₃.

When a certain time elapses from the time T₂ (i.e., when the time T₃ is reached), the process B recognizes that use of "parts" and manufacturing of "products" with respect to the articles to which the virtual box name 001 is assigned are finished. Therefore, the worker presses the use end button and the manufacture end button. Accordingly, the CPU 311 of the terminal 3B updates the management data B₀₀₁ and B'₀₀₁.

When the use end button is pressed at the time T₃, the CPU 311 of the terminal 3B stores "T₃" in the field "t'ₑ" of the management data B₀₀₁. Further, the CPU 311 of the terminal 3B transmits the update management data B₀₀₁ to the terminal 3A. The CPU 311 of the terminal 3A which received the management data B₀₀₁ searches for the management data having the same field data of "virtual box number", "Proₙ" and "Partₙ" as that of the management data B₀₀₁. In this case, the management data A'₀₀₁ is searched for. The CPU 311 of the terminal 3A stores corresponding data (i.e., "T₃") of the management data B₀₀₁ in the field "t'ₑ" of the management data A'₀₀₁.

When the manufacture end button is pressed, the CPU 311 of the terminal 3B stores "T₃" in each of the fields "tₑ" and "t'ₛ" of the management data B'₀₀₁. Then, the CPU 311 of the terminal 3B transmits the management data B'₀₀₁ which serves as a link to the process C, to the terminal 3C via the LAN 2.

Through the above mentioned sequence of processes, the group of articles which passed through the process B between the time T₂ and the time T₃ is also processed in the article management system as a group having an identification of the virtual box number "001".

To create the management data for articles carried after the time T₃, the worker of the process B also presses the use start button and the manufacture start button. When the use start button is pressed, the CPU 311 of the terminal 3B creates the management data B₀₀₂, stores "B" in the field "Partₙ" of the management data, stores "T₃" in the field "t'ₛ" of the management data, and assigns a virtual box number "002" to the management data B₀₀₂. The terminal 3B has stored the management data A'₀₀₂ transmitted from the terminal 3A, in the HDD 312. Regarding the fields "Partₙ" and "t'ₛ", the management data B₀₀₂ has the same data as that of the management data A'₀₀₂. The terminal 3B judges such management data to be data to be shared with the adjacent process. To share the above mentioned data between the terminals 3A and 3B, each field of the management data A'₀₀₂ (excepting the inspection result) is copied to each field of the management data B₀₀₂. With this configuration, the management data B₀₀₂ and the management data A'₀₀₂ have the same data excepting the field data of "inspection result".

When the manufacture start button is pressed at the time T₃, the CPU 311 of the terminal 3B creates management data B'₀₀₂, stores "B" in the field "Proₙ", stores "T₃" in the field "tₛ" in the management data B'₀₀₂, stores "C" representing the next process of the process B in the field "Partₙ", and assigns a virtual box number "002" to the management data B'₀₀₂.

As in the cases of the processes A and B, when the articles arrive at the process C, the worker of the process C presses the use start button and the manufacture start button. Correspondingly, the CPU 311 of the terminal 3C executes a program loaded into the RAM 313 to create the management data, and stores the management data in the HDD 312. Further, the CPU 311 of the terminal 3C receives the management data B'₀₀₁ transmitted from the terminal 3B, and stores it temporarily in the HDD 312.

When the use start button is pressed at the time T₃, the CPU 311 of the terminal 3C creates the management data C_{001,} stores "C" in the field "Partₙ" of the management data, stores "T₃" in the field "t'ₛ" of the management data, and assigns a virtual box number "001" to the management data C₀₀₁. Regarding the fields "Partₙ" and "t'ₛ", the management data C₀₀₁ has the same data as that of the management data B'₀₀₁. The terminal 3C judges such management data to be data to be shared with the adjacent process. To share the above mentioned data between the terminals 3B and 3C, each field of the management data B'₀₀₁ (excepting the inspection result) is copied to each field of the management data C₀₀₁. With this configuration, the management data C₀₀₁ and the management data B'₀₀₁ have the same data excepting the field data of "inspection result".

When the manufacture start button is pressed at the time T'₃, the CPU 311 of the terminal 3C creates management data C'₀₀₁, stores "C" in the field "Proₙ", stores "T₃" in the field "tₛ" in the management data C'₀₀₁, stores "D" representing the next process of the process C in the field "Partₙ", and assigns a virtual box number "001" to the management data C'₀₀₁.

As shown in Fig. 4(f), at the time T'₃, the front of the articles flowing along the belt conveyer 4 is situated between the process C and the next process (process D). In this case, the front of the group of articles to which the virtual box number 003 is assigned is situated between the process A and the process B. Further, the front of the group of articles to which the virtual box number 002 is assigned is situated between the process B and the process C.

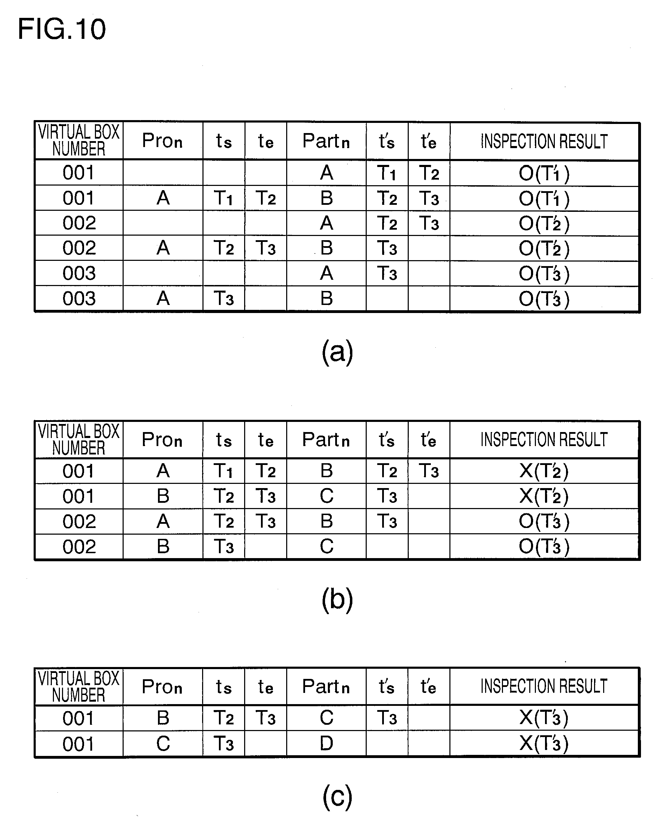

Fig. 10(a) illustrates the management data updated by the terminal 3A at the time T'₃. Fig. 10(b) illustrates the management data updated by the terminal 3B at the time T'₃. Fig. 10(c) illustrates the management data updated by the terminal 3C at the time T'₃. At the time T'₃, the sampling inspection is conducted in each of the processes A, B and C. It is assumed that in the processes A and B articles are judged to be nondefective, and therefore "O(T'₃)" is stored by a user operation in the fields "inspection result" of each of the management data A₀₀₃ and A'₀₀₃ and the management data B₀₀₂ and B'₀₀₂. It is assumed that defectives are found in the process C, and therefore "×(T'₃)" is stored in the field "inspection result" of each of the management data C₀₀₁ and the management data C'₀₀₁.

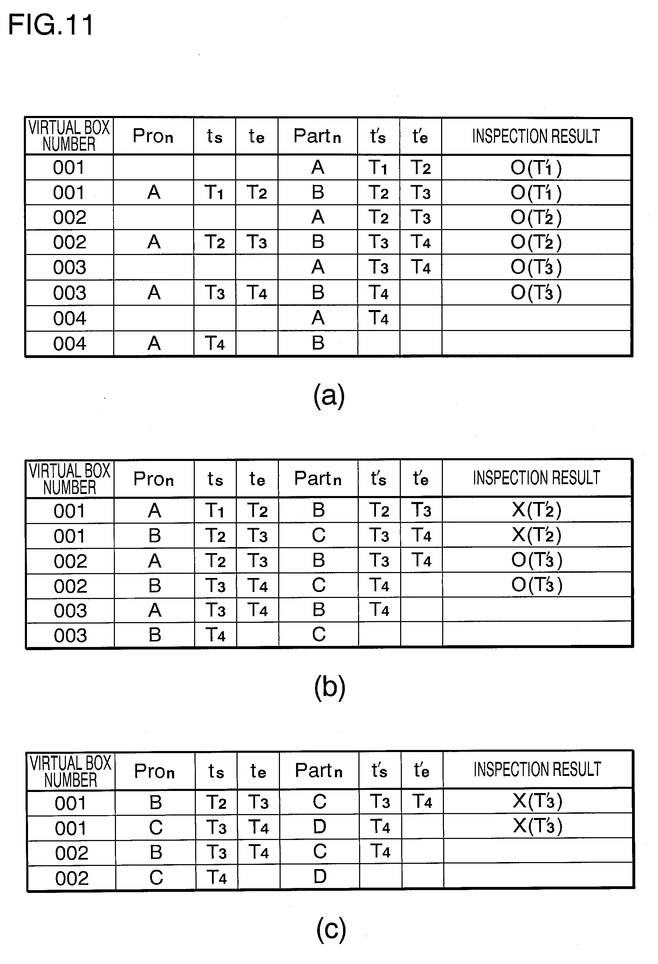

The front of the articles flowing along the belt conveyer 4 arrives at the process D (not shown) at the time T₄. Fig. 11(a) illustrates the management data updated in the terminal 3A at the time T₄. Fig. 11(b) illustrates the management data updated in the terminal 3B. Fig. 11(c) illustrates the management data updated in the terminal 3C at the time T₄.

When a certain time elapses from the time T₃ (i.e., when the time T₄ is reached), the process A recognizes that use of "parts" and manufacturing of "products" with respect to the articles to which the virtual box name 003 is assigned are finished. Therefore, the worker presses the use end button and the manufacture end button. Accordingly, the CPU 311 of the terminal 3A updates the management data A₀₀₃ and A'₀₀₃.

When the use end button is pressed, the CPU 311 of the terminal 3A stores "T₄" in the field "t'ₑ" of the management data A₀₀₃. Further, when the manufacture end button is pressed, the CPU 311 of the terminal 3A stores "T₄" in each of the fields "tₑ" and "t'ₛ" of the management data A'₀₀₃. Then, the CPU 311 of the terminal 3A transmits the management data A'₀₀₃ which serves as a link to the process B, to the terminal 3B via the LAN 2.

Through the above mentioned sequence of processes, the group of articles which passed through the process A between the time T₃ and the time T₄ is processed in the article management system as a group having an identification of the virtual box number "003".

The worker of the process A also presses the use start button and the manufacture start button to create the management data for articles carried into the process A after the time T₄. When the use start button is pressed, the CPU 311 of the terminal 3A creates management data A₀₀₄, stores "A" in the fields "Partₙ", stores "T₄" in the field "t'ₛ", and assigns a virtual box number "004" to the management data A₀₀₄. When the manufacture start button is pressed, the CPU 311 of the terminal 3A creates management data A'₀₀₄, stores "A" in the fields "Proₙ", stores "T₄" in the field "tₛ", stores "B" in the field "Partₙ" and assigns a virtual box number "004" to the management data A'₀₀₄.

When a certain time elapses from the time T₃ (i.e., when the time T₄ is reached), the process B recognizes that use of "parts" and manufacturing of "products" with respect to the articles to which the virtual box name 002 is assigned are finished. Therefore, the worker presses the use end button and the manufacture end button. Accordingly, the CPU 311 of the terminal 3B updates the management data B₀₀₂ and B'₀₀₂.

When the use end button is pressed at the time T₄, the CPU 311 of the terminal 3B stores "T₄" in the field "t'ₑ" of the management data B₀₀₂. Further, the CPU 311 of the terminal 3B transmits the update management data B₀₀₂ to the terminal 3A. The CPU 311 of the terminal 3A which received the management data B₀₀₂ searches for the management data having the same field data of "virtual box number", "Proₙ" and "Partₙ" as that of the management data B₀₀₂, In this case, the management data A'₀₀₂ is searched for. The CPU 311 of the terminal 3A stores corresponding data (i.e., "T₄") of the management data B₀₀₂ in the field "t'ₑ" of the management data A'_{002.}

When the manufacture end button is pressed, the CPU 311 of the terminal 3B stores "T₄" in each of the fields "tₑ" and "t'ₛ" of the management data B'₀₀₂. Then, the CPU 311 of the terminal 3B transmits the management data B'₀₀₂ which serves as a link to the process C, to the terminal 3C via the LAN 2.

Through the above mentioned sequence of processes, the group of articles which passed through the process B between the time T₃ and the time T₄ is also processed in the article management system as a group having an identification of the virtual box number "002".

To create the management data for articles carried after the time T₄, the worker of the process B also presses the use start button and the manufacture start button. When the use start button is pressed, the CPU 311 of the terminal 3B creates the management data B₀₀₃, stores "B" in the field "Partₙ" of the management data, stores "T₃" in the field "t'ₛ" of the management data, and assigns a virtual box number "003" to the management data B₀₀₃. The terminal 3B has stored the management data A'₀₀₃ transmitted from the terminal 3A, in the HDD 312. Regarding the fields "Partₙ" and "t'ₛ", the management data B₀₀₃ has the same data as that of the management data A'₀₀₃. The terminal 3B judges such management data to be data to be shared with the adjacent process. To share the above mentioned data between the terminals 3A and 3B, each field of the management data A'₀₀₃ (excepting the inspection result) is copied to each field of the management data B₀₀₃. With this configuration, the management data B₀₀₃ and the management data A'₀₀₃ have the same data excepting the field data of "inspection result".

When the manufacture start button is pressed at the time T₄, the CPU 311 of the terminal 3B creates management data B'₀₀₃, stores "B" in the field "Proₙ", stores "T₄" in the field "tₛ" in the management data B'₀₀₃, stores "C" representing the next process of the process B in the field "Partₙ", and assigns a virtual box number "003" to the management data B'₀₀₃.

When a certain time elapses from the tome T₃ (i.e., when the time T₄ is reached), the process C recognizes that use of "parts" and manufacturing of "products" with respect to the articles to which the virtual box name 001 is assigned are finished. Therefore, the worker presses the use end button and the manufacture end button. Accordingly, the CPU 311 of the terminal 3C updates the management data C₀₀₁ and C'₀₀₁.

When the use end button is pressed, the CPU 311 of the terminal 3C stores "T₄" in the field "t'ₑ" of the management data C₀₀₁. Further, the CPU 311 of the terminal 3C transmits the updated management data C₀₀₁ to the terminal 3B. The terminal 3B which received the management data C₀₀₁ searches for the management data having the same field data of "virtual box number", "Proₙ" and "Partₙ" as that of the management data B₀₀₁. In this case, the management data B'₀₀₁ is searched for. The CPU 311 of the terminal 3B stores corresponding data (i.e., "T₄") of the management data C₀₀₁ in the field "t'ₑ" of the management data B'₀₀₁.

When the manufacture end button is pressed, the CPU 311 of the terminal 3C stores "T₄" in each of the fields "tₑ" and "t'ₛ" of the management data C'₀₀₁. Then, the CPU 311 of the terminal 3C transmits the updated management data C'₀₀₁ which serves as a link to the process D, to the terminal 3D via the LAN 2.

Through the above mentioned sequence of processes, the group of articles which passed through the process B between the time T₃ and the time T₄ is also processed in the article management system as a group having an identification of the virtual box number "001".

To create the management data for articles carried after the time T₄, the worker of the process C also presses the use start button and the manufacture start button. When the use start button is pressed, the CPU 311 of the terminal 3C creates the management data C₀₀₂, stores "C" in the field "Partₙ" of the management data, stores "T₄" in the field "t'ₛ" of the management data, and assigns a virtual box number "002" to the management data C₀₀₂. The terminal 3C has stored the management data B'₀₀₂ transmitted from the terminal 3B, in the HDD 312. Regarding the fields "Partₙ" and "t'ₛ", the management data C₀₀₂ has the same data as that of the management data B'₀₀₂. The terminal 3C judges such management data to be data to be shared with the adjacent process. To share the above mentioned data between the terminals 3R and 3C, each field of the management data B'₀₀₂ (excepting the inspection result) is copied to each field of the management data C₀₀₂. With this configuration, the management data C₀₀₂ and the management data B'₀₀₂ have the same data excepting the field data of "inspection result".

When the manufacture start button is pressed at the time T₄ the CPU 311 of the terminal 3C creates management data C'₀₀₂, stores "C" in the field "Proₙ", stores "T₄" in the field "tₛ" in the management data C'₀₀₂, stores "D" representing the next process of the process C in the field "Partₙ", and assigns a virtual box number "002" to the management data C'₀₀₂.

The above mentioned sequence of processes is executed on the other terminals. In the article management system according to the embodiment, the server 1 searches the HDD 312 to execute tracing based on the inspection result. As an example, the tracing which is executed, by going back to the previous processes, for the group of articles to which the virtual box number 001 is assigned will now be described.

To execute the tracing for the group of articles to which the virtual box number "001" is assigned, the server 1 accesses the terminal 3C, for example. Then, the management data stored in the HDD 312 of the terminal 3C is searched. Since the tracing is a type of process going back to previous processes, the server 1 obtains the management data having the virtual box number 001 and having data of processes different from a process to which the management data pertains as "previous process data" (or the management data having the process's data as "next process data"). That is, the server 1 obtains the management data Cool as a search result.

The server 1 refers to the "Proₙ" of the management data C₀₀₁ to obtain information (i.e., the process B) regarding a process on the upstream side of the process C. Then, based on the obtained information, the server 1 accesses the terminal 3B and searches the management data stored in the HDD 312 of the terminal 3B. The server 1 obtains the management data having the virtual box number "001" and having data of processes different from a process to which the management data pertains as "previous process data" (or the management data having the process's data as "next process data"). That is, the server 1 obtains the management data B₀₀₁ as a search result.

The server 1 refers to "Proₙ" of the management data B₀₀₁ to obtain information (i.e., the process A) regarding a process on the upstream side of the process B. Then, the server accesses the terminal 3A based on the obtained information, and searches the management data stored in the HDD 312 of the terminal 3A. The server 1 obtains the management data having the virtual box number "001" and having data of processes different from a process to which the management data pertains as "previous process data" (or the management data having the process's data as "next process data"). That is, the server 1 obtains the management data A₀₀₁ as a search result. Since the management data A₀₀₁ does not contain "previous process data", the server 1 judges the process A to be an uppermost process.

The server 1 refers to the management data A_{001,} the management data B₀₀₁ and the management data C₀₀₁ which are obtained by he above mentioned tracing, and obtains path information (i.e., a path formed by connecting the processes A, B, C ... in this order) of the group of articles of the virtual box number "001". Further, the server 1 obtains the results of the sampling inspection executed for the group of articles of the virtual box number "001". The obtained inspection results indicate that "articles are judged to be nondefective in the sampling inspection at the time T'₁, and articles are judged to be defective in the sampling inspections at the time T'₂ and the time T'₃". By referring to time data contained in the management data (e.g., data of fields "t'ₛ" and "t'ₑ" of the management data B₀₀₁), the server 1 is able to recognize that the sampling inspection conducted at the time T'₂ is executed in the process B. Consequently, the server 1 judges that there is a high possibility that the group of articles of the virtual box number "001" became defective at the process B. A manager is able to quickly address defectives while referring to the result.

As described above, in article management system according to the embodiment, articles are identified by associating articles with time information. That is, groups of articles flowing along a production line are divided in a time series, and each divided group is assigned a virtual box number which is virtually assigned to each group, so that management of articles can be attained. Therefore, there is no necessity to assign identification information such as a lot number, a barcode, an IC chip, etc. to each article. Consequently, it becomes possible to reduce processes for adding identification information (e.g., an IC chip, a barcode, etc.) to each article, and thereby to achieve cost reduction.

By employing the article management system according to the present invention, it is possible to easily execute the tracing without the need of assigning identification information to each of management targets.

Although the present invention has been described in considerable detail with reference to certain preferred embodiments thereof, other embodiments are possible.

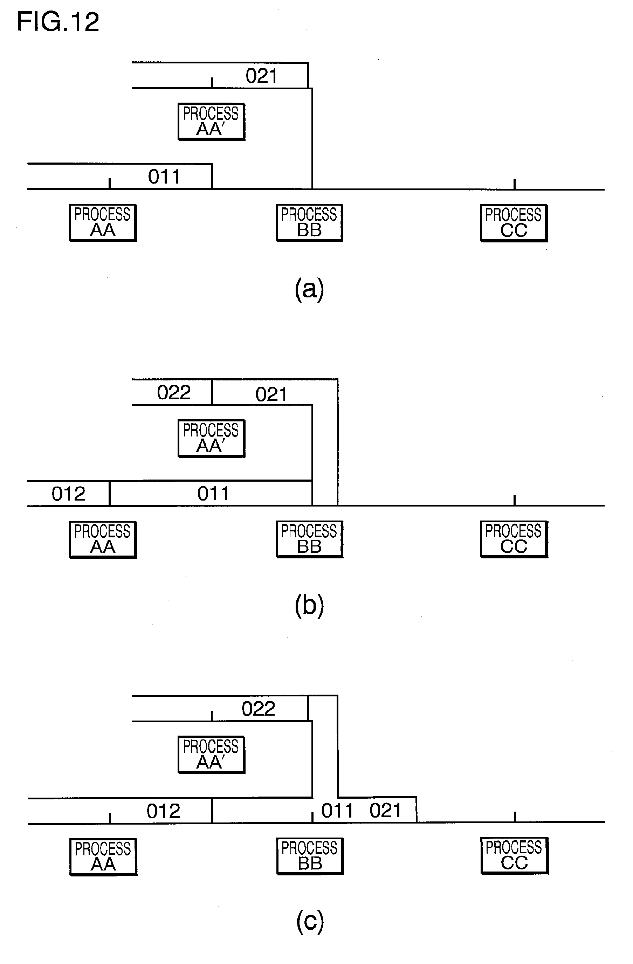

In the above mentioned embodiment, the article management system is applied to the production line not having branches. However, in another embodiment, the article management system according to the invention may be applied to a production line having a mixing point where articles are mixed (or a branch from which a flow of articles is branched). Fig. 12 illustrates a flow of articles processed through each process according to another embodiment of the invention. As in the case of the above mentioned embodiment, a terminal 3AA is provided in a process AA, a terminal 3BB is provided in a process BB, a terminal 3CC is provided in a process CC, and a terminal AA' is provided in a process AA'. Figs. 12(a) to 12(c) show flows of articles at the time T'₁₁, T₁₂, T'₁₂, respectively. Time proceeds in the order of time T₁₁, T'₁₁, T₁₂, T'₁₂ .... The intervals of these times are equal to each other.

On the production line shown in Fig. 12, the process AA, the process BB, the process CC ··· are connected sequentially. In addition to the process AA, the process AA' is connected to the process BB on the downstream side. In another embodiment, articles arriving from the process AA and articles arriving from the process AA' are mixed at the process BB. For example, it is assumed that the process AA is a process for cleaning rice and the process AA' is a process for cleaning wheat. Further, the process BB is a process for mixing rice and wheat, and the process CC is a process for bagging the mixed rice and wheat.

The front of articles (e.g., rice) conveyed on the belt conveyer reaches the process AA at the time T₁₁ and is cleaned. The front of articles (e.g., wheat) conveyed on another belt conveyer reaches the process AA' at the time T₁₁ and is cleaned. At this moment, the terminals 3AA and 3AA' respectively create the management data AA₀₁₁ and the management data AA'₀₂₁ which are the same as that shown in Fig. 5. The terminals 3AA and 3AA' respectively assign virtual box numbers "011" and "021" to the articles.

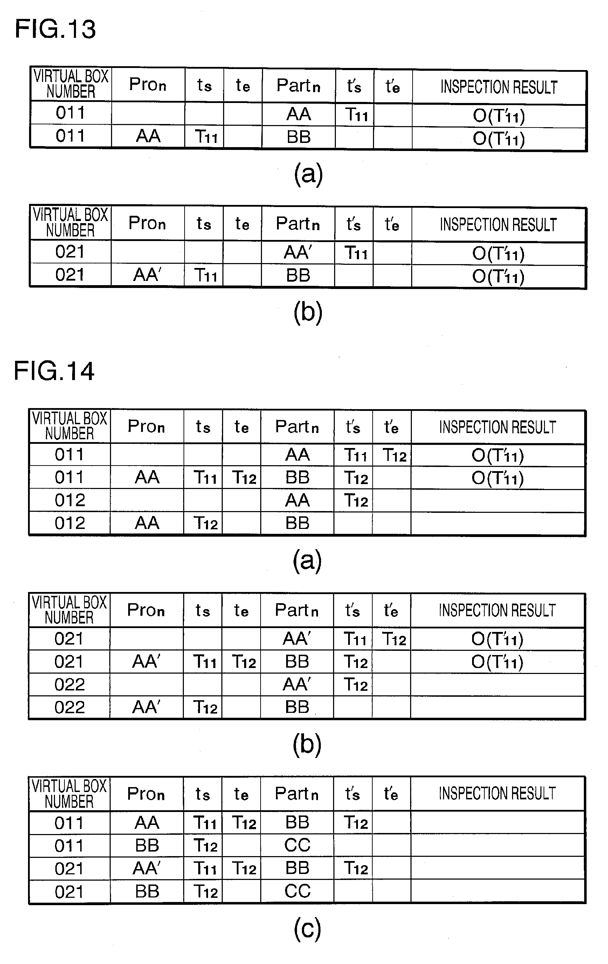

Fig. 13(a) illustrates the management data AA₀₁₁ created by the terminal 3AA at the time T'₁₁. Fig. 13(b) illustrates the management data AA'₀₂₁ created by the terminal 3AA' at the time T'₁₁. As shown in Fig. 12(a), the rice which passed through the process AA is situated between the process AA and the process BB at the time T'₁₁. The wheat which passed through the process AA' is situated between the process AA' and the process BB at the time T'₁₁. Sampling inspection is conducted at the time T'₁₁, and then the terminals 3AA and 3AA' update the management data based on the inspection results.

Fig. 14(a) illustrates the management data updated by the terminal 3AA at the time T₁₂. Fig. 14(b) illustrates the management data created by the terminal 3AA' at the time T₁₂. Fig. 14(c) illustrates the management data created by the terminal 3BB at the time T₁₂. As shown in Fig. 12(b), the rice and wheat which respectively passed the process AA and the process AA' reach the process BB at the time T₁₂ and are mixed. At this moment, the terminals 3AA and 3AA' crate the management data which is the same as that shown in Fig. 7(a). The terminal 3BB creates the management data which is the same as that shown in Fig. 7(b), with respect to the rice to which the virtual box number "001" is assigned and the wheat to which the virtual box number "021" is assigned.

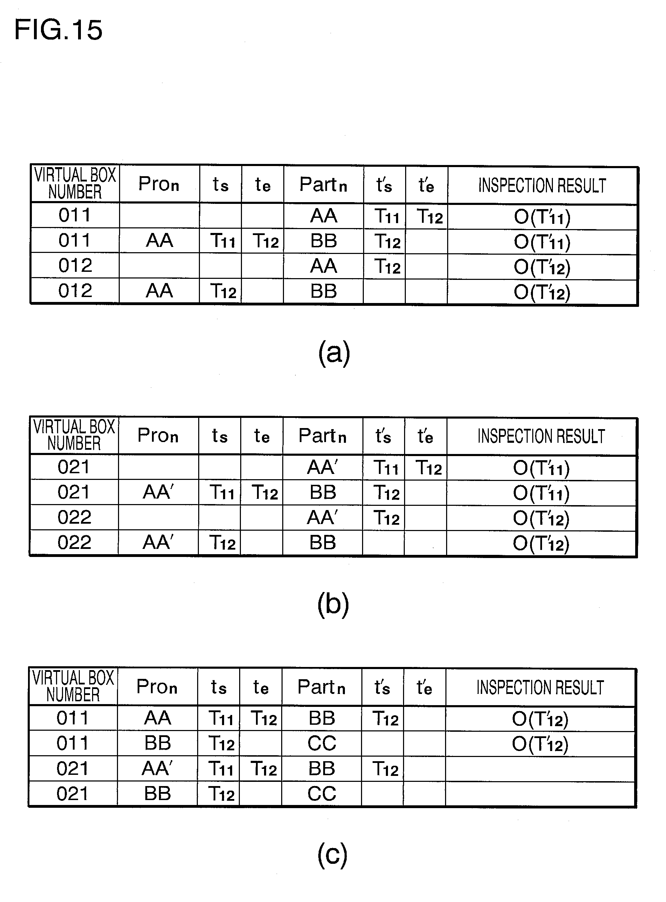

Fig. 15(a) illustrates the management data created by the terminal 3AA at the time T'₁₂. Fig. 15(b) illustrates the management data created by the terminal 3AA' at the time T'₁₂. Fig. 15(c) illustrates the management data created by the terminal 3BB at the time T'₁₂. As show in Fig. 12(c), the rice and wheat mixed at the process BB are situated between the process BB and the process CC at the time T'₁₂. In addition, the rice which passed through the process AA (i.e., the articles to which the virtual box number "012" is assigned) is situated between the process AA and the process BB. In addition, the wheat which passed through the process AA' (i.e., the articles to which the virtual box number "022" is assigned) is situated between the process AA' and the process BB. Sampling inspection is conducted at the time T'12, and the terminals 3AA, 3AA' and 3BB update the management data abased on the inspection results. Next, after reaching the process CC, the rice and wheat are bagged in predetermined amounts, sealed in a later process, and are shipped.

Similarly to the above described embodiment, it is possible to execute the tracing in the article management system according to another embodiment. That is, the article management system according to the invention can be applied to a production line having a mixing point (or a branching point). In particular, the article management system according to the invention has an advantage in its suitability for management articles, such as rice or wheat, for which providing of identification information (e.g., a lot number, a barcode or an IC chip) is difficult.

In the above mentioned embodiment, an act for manufacturing a product while processing parts is defined as a process, and a cluster being transferred through processes is defined as a box. However, a system configured to quickly judge whether a possibility of a problem arises during movement of articles between processes and a system for tracing the problem can also be applied to other fields (e.g., distribution, an economy, and etc.) by replacing "article", "process", "product", "part" and "box" with other ones, respectively.

For example, the "article" may be replaced with a "tangible object" (e.g., the above mentioned parts and products or meat) or an "intangible" (e.g., an economy, management, or etc.). The "process" may be replaced with "processing" to be applied to various types of articles. The "product" may be replaced with a "produced object" produced in certain processing. The "part" may be replaced with a "partial object" used to make the produced object. The "box" may be replaced with a "cluster" being transferred through processes. By replacing the elements as described above, the management system according to the embodiment may be applied to various forms of distributed traceability management systems for managing a tangible object such as meat and for managing an intangible corresponding to information for controlling an economy, management or distribution.

In an embodiment of the invention, a first time may be a manufacture start time at which the manufacturing of products is started in a previous process, a second time may be a manufacture end time at which the manufacturing of products finishes. Further, the first time may be a use start time at which use of parts is started in a next process, and the second time may be a use end time at which the use of parts finishes.

In an embodiment of the invention, the management data may include a result of an inspection conducted at a time between the first time and the second time.

In an embodiment of the invention, a plurality of articles may flow along a belt conveyer, and an identification assigning unit may operate to divide a plurality of same articles passing through a certain point on the belt conveyer in a time series and to assign virtual identification to each divided management target group.

## Claims

1. An article management system having a previous process where management targets to be used as parts in a next process are manufactured as products and a next process where second products are manufactured by using the products manufactured in the previous process as parts, the previous process and the next process being successively connected to model a plurality of processes as a hierarchical structure, the article management system comprising:
a product data creation means which creates, for the management targets, product data corresponding to products of the previous process;
a part data creation means which creates part data corresponding to parts in the next process and corresponding to the products;
an identification assigning means which assigns virtual identification information to a plurality of management targets subjected to a process between a first time and a second time in at least one of the previous process and the next process; and
a management data creation means which creates management data formed of a single file by associating the product data, the part data and the identification information with each other.

2. The article management system according to claim 1, wherein:
the first time is a manufacture start time when manufacturing of products is started in the previous process; and
the second time is a manufacture end time when the manufacturing of products finishes.

3. The article management system according to claim 1, wherein:
the first time is a use start time when use of parts is started in the next process; and
the second time is a use end time when the use of parts finishes.

4. The article management system according to any of claims 1 to 3, wherein the management data includes a result of an inspection conducted at a time between the first time and the second time.

5. The article management system according to any of claims 1 to 4, wherein:
the plurality of articles flow along a belt conveyer; and
the identification assigning means operates to divide a plurality of same articles passing through a certain point on the belt conveyer in a time series and to assign virtual identification information to each divided management target group.

6. An article management system for managing articles processed successively in a plurality of processes arranged in a hierarchical structure, comprising:
a previous process data creation means which creates previous process data concerning a previous process where articles are processed and stores the previous process data;
a next process data creation means which creates next process data concerning a next process which is located on a downstream of the previous process and in which the articles processed in the previous process are processed further, and stores the next process data while associating the next process data with the previous process data; and
an identification assigning means which assigns, at predetermined time intervals, virtual identification information to an article group which is processed in the previous process and is not processed in the next process, and stores the identification information while associating the identification information with the previous process data and the next process data.
